# EUROPÄISCHE PATENTSCHRIFT

(11) **EP 2 131 989 B1**
(45) Veröffentlichungstag und Bekanntmachung des Hinweises auf die Patenterteilung: **06.07.2011**
(21) Anmeldenummer: 07723903.6
(22) Anmeldetag: 02.04.2007
(51) Int. Cl.: B23K 9/20, B21D 1/10, B23K 37/04

(54) **SCHWEISSBITHALTER**
WELDING BIT HOLDER
SUPPORT DE PLOT DE CONTACT DE SOUDAGE

(43) Veröffentlichungstag der Anmeldung: 16.12.2009
(73) Patentinhaber: HBS Bolzenschweiss-Systeme GmbH & Co. KG, 85221 Dachau (DE)
(72) Erfinder: RIEDER, Bernhard, 85241 Ebertshausen (DE)
(74) Vertreter: Strehl Schübel-Hopf & Partner
(86) Internationale Anmeldenummer: PCT/EP2007/002962
(87) Internationale Veröffentlichungsnummer: WO 2008/119365

(56) Entgegenhaltungen:
- DE-A1-102004 060 389
- JP-A- 7 032 042
- JP-A- 2003 225 772

## Beschreibung

Zum Ausbeulen von Fahrzeugkarosserien werden auf das eingedrückte Blech Schweißbits aufgeschweißt, an denen ein Werkzeug zum Herausziehen der eingedrückten Partie ansetzen kann. An linienförmigen Knicken können mehrere Schweißbits mit ösenförmigem Kopf so angesetzt werden, dass die Ösen miteinander fluchten und von einer Stange durchsetzt werden können, um den linienförmig verformten Bereich in einem gemeinsamen Ziehvorgang auszubeulen. Handelt es sich um Aluminiumblech, so müssen auch die Schweißbits aus Aluminium bestehen.

Das Anschweißen der Bits erfolgt mit einer handgeführten Schweißpistole. Es kommt darauf an, dass die Pistole leicht und möglichst klein ist, damit sie auch an schwer zugänglichen Stellen eingesetzt werden kann. Ferner muss gewährleistet sein, dass das aus Aluminiumblech gefertigte Schweißbit an seinem ösenförmigen Kopf sicher in der Schweißpistole gehalten ist und ein möglichst widerstandsarmer Übergang des erheblichen Schweißstroms von der Pistole auf das Schweißbit stattfindet.

Aus DE 10 2004 060 389 A1 ist eine Vorrichtung zur Halterung eines flächigen Schweißbits an einer Schweißvorrichtung gemäß dem Oberbegriff des Anspruchs 1 bekannt. Das Schweißbit wird dort mittels einer Schraube mit Tellerfeder zwischen einer Grundplatte und einer Anpressplatte eingeklemmt.

Eine Aufgabe der Erfindung ist darin zu sehen, eine sichere Halterung des Schweißbits in seiner Aufnahme zu gewährleisten.

Die Lösung dieser Aufgabe gelingt mit der in Anspruch 1 angegebenen erfindungsgemäßen Vorrichtung.

Bei dieser Vorrichtung lässt sich das Schweißbit zwischen die Kontaktfläche des Aufnahmeteils und die Spanneinrichtung einschieben, wobei die Spanneinrichtung das Schweißbit nicht nur mechanisch festhält, sondern auch einen guten Stromübergang zwischen der Kontaktfläche des Aufnahmeteils und dem Schweißbit gewährleistet. Gleichzeitig bewirken die Führungs- und Anschlagflächen des Aufnahmeteils in Verbindung mit der Spanneinrichtung eine sichere Halterung des Schweißbits in der vorgesehenen Orientierung. Die federbelastete Rolle vermindert die Reibung beim Einschieben und erleichtert gleichzeitig wegen ihrer runden Form das "Einfädeln" des Schweißbits.

Die Weiterbildung der Erfindung nach Anspruch 2 ist insbesondere bei Schweißbits mit ösenförmigem Kopf insofern günstig, als ein guter Stromübergang auf das Material des Schweißbits gewährleistet ist, gleichzeitig aber unnötige Reibung beim Einschieben des Schweißbits in die Halterung vermieden wird.

Die in Anspruch 3 angegebene Form der Rolle sorgt dafür, dass ihre Vorspannung gezielt auf den an der Kontaktfläche des Aufnahmeteils anliegenden Randbereich des Schweißbits aufgebracht wird. Wird die Vorspannkraft gemäß Anspruch 4 erzeugt, so ergibt sich eine für die Fertigung und etwaige Reparaturen besonders einfache Gestaltung.

Die Weiterbildungen der Erfindung nach den Ansprüchen 5 bis 9 machen die Vorrichtung für Schweißvorgänge unter Schutzgas geeignet. Dabei macht es die in Anspruch 7 angegebene Maßnahme möglich, die Schutzgaszuführung je nach den Platzverhältnissen am Einsatzort an einer möglichst wenig störenden Stelle am Aufnahmeteil anzubringen.

Ein Ausführungsbeispiel der Erfindung wird nachstehend anhand der Zeichnungen näher erläutert; darin zeigen
FIG. 1 eine Schweißpistole mit Schweißbithalter,
FIG. 2 eine vergrößerte Darstellung des Schweißbithalters und
FIG. 3 eine zerlegte Darstellung des Schweißbithalters nach Fig. 2.

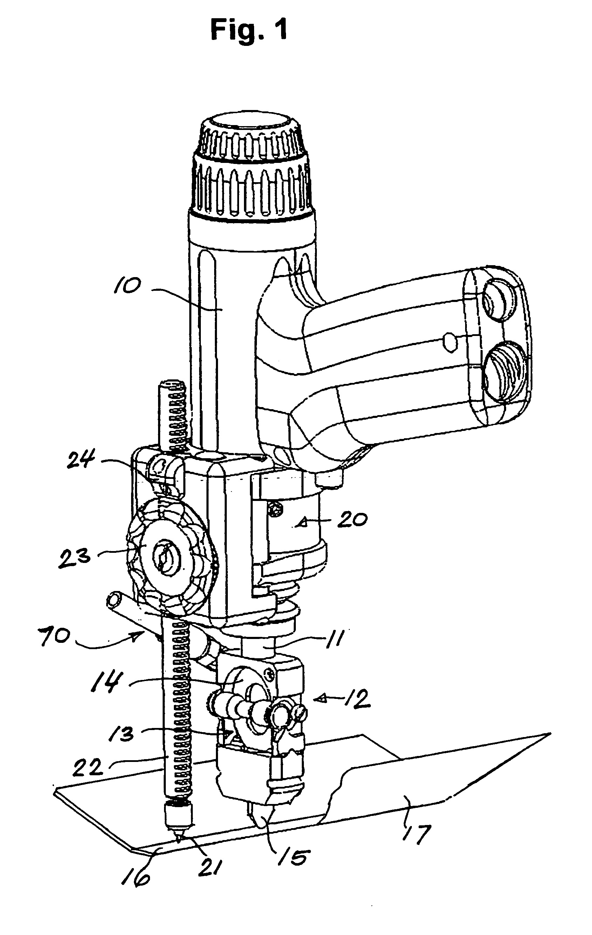

Die in Fig. 1 gezeigte Schweißpistole ist insbesondere zum Anschweißen von Aluminium-Schweißbits mit ösenförmigem Kopf an Aluminiumblechen mittels Hubzündung zum Ausbeulen von Fahrzeugkarosserien bestimmt. Der Pistolenkörper **10** ist an seiner auf- und abbewegbaren Kolbenstange **11** mit einem Schweißbithalter **12** versehen, in den gemäß der Darstellung nach Fig. 1 ein Schweißbit **13** eingesetzt ist. Von dem Schweißbit **13** sind der ösen- oder ringförmige Kopf **14** und die Spitze **15** zu sehen, die auf einen Knickbereich **16** eines Blechs **17** aufgesetzt ist.

An dem Pistolenkörper **10** ist ferner ein Stativ **20** angeordnet, das einen mit seiner Spitze **21** auf das Blech **17** aufgesetzten Stativstab **22** aufweist. Der Stativstab **22** ist in der Höhe mittels eines Rades **23** verstellbar, das durch einen Rastschieber **24** arretierbar ist.

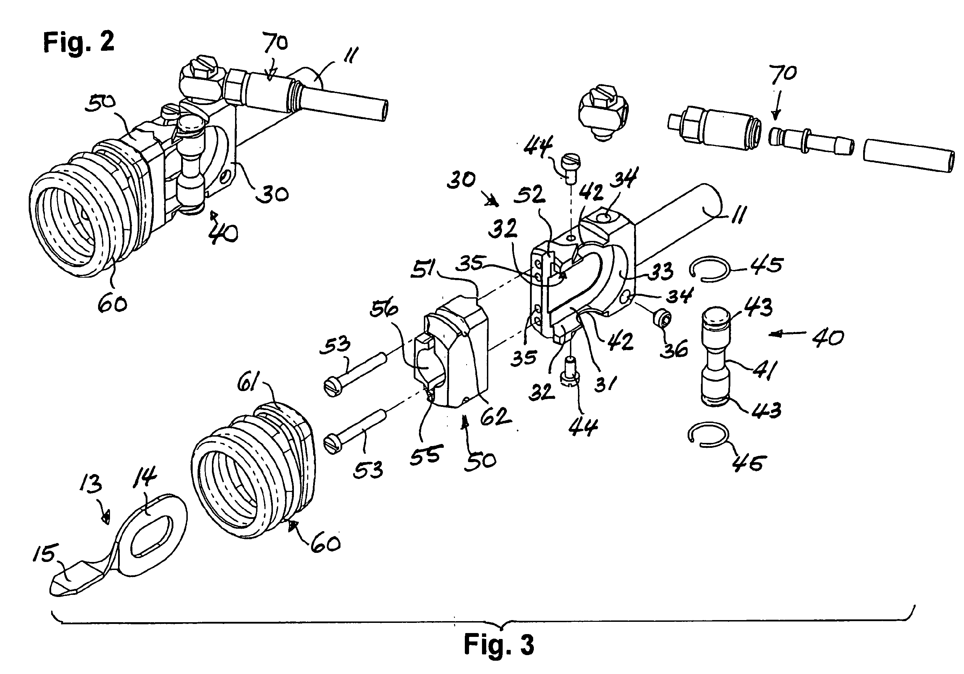

Gemäß Fig. 2 und 3 umfasst der Schweißbithalter **12** ein an die Kolbenstange **11** der Schweißpistole angeformtes Aufnahmeteil **30,** eine insgesamt mit **40** bezeichnete Spanneinrichtung, ein Abschlussteil **50,** einen Balg **60** und eine Schutzgaszuführung **70.**

Das Aufnahmeteil **30** besteht aus leitendem Metall, beispielsweise Messing, und weist eine etwa hufeisenförmige Kontaktfläche **31,** zwei einander gegenüberliegende Führungsflächen **32** und eine Anschlagfläche **33** auf. In dem gezeigten Ausführungsbeispiel sind die Führungsflächen und die Anschlagflächen als zusammenhängende und entsprechend der Hufeisenform der Kontaktfläche **31** gestaltete Innenwand des insgesamt etwa kastenförmigen Aufnahmeteils **30** gestaltet.

An einer Oberfläche und an einer Seitenfläche des Aufnahmeteils **30** sind jeweils eine Einlassbohrung **34** zum Anschluss der Schutzgaszuführung **70** vorgesehen. Die Einlassbohrungen **34** stehen mit an der Stirnseite des Aufnahmeteils **30** vorhandenen Auslassöffnungen **35** in Verbindung. In Fig. 2 und 3 ist die Schutzgaszuführung **70** an die obere Einlassbohrung **34** angeschlossen, während die andere mit einer Madenschraube **36** verschlossen ist. Wo die Schutzgaszuführung **70** angeschlossen wird, richtet sich nach den Platzverhältnissen am jeweiligen Einsatzort.

Die Spanneinrichtung **40** besteht aus einer Kunststoffrolle **41,** die einen mittleren Bereich mit gegenüber ihren Endbereichen verringertem Durchmesser hat. Die Endbereiche sind in halbkreisförmigen Aussparungen **42** des Aufnahmeteils **30** gelagert. Ferner weisen die Endbereiche der Rolle **41** jeweils eine Ringnut **43** auf, in die ein an der jeweiligen Außenseite des Aufnahmeteils **30** mit Hilfe einer Schraube **44** befestigter Sprengring **45** eingreift. Auf diese Weise ist die Rolle **41** federnd in Richtung der Kontaktfläche **31** des Aufnahmeteils **30** vorgespannt.

Das aus Kunststoff bestehende Abschlussteil **50** greift mit einem an seiner hinteren Fläche vorgesehenen keilförmigen Vorsprung **51** in eine an der Vorderseite des Aufnahmeteils **30** vorgesehene keilförmige Vertiefung **52** ein und ist mit dem Aufnahmeteil **30** durch Schrauben **53** verbunden.

Das Abschlussteil **50** weist einen der Form des Schweißbits **13** angepassten, in Fig. 3 senkrecht stehenden Schlitz **55** zum Hindurchführen des Schweißbits **13** auf. Im übrigen wird das Abschlussteil **50** von einer großen zylindrischen Bohrung **56** durchsetzt, in die die Schutzgas-Auslassöffnungen **35** münden.

Der elastische Faltenbalg **60** ist an seinem hinteren Ende mit einem Wulstflansch **61** versehen, der durch Eingreifen in eine Nut **62** des Abschlussteils **50** mit diesem verbunden werden kann. Der Balg **60** dient zur Abschirmung der Schweißstelle und zur Begrenzung des Schutzgases auf diese.

Bei Benutzung der Schweißpistole wird das Schweißbit **13,** das in dem gezeigten Ausführungsbeispiel aus Aluminiumblech geformt ist und einen etwa ovalen, ösen- oder ringförmigen Kopf **14** und eine gegenüber diesem um **90°** gekröpfte Spitze **15** aufweist, durch den Schlitz **55** in dem Abschlussteil **50** hindurch in den Spalt zwischen der Kontaktfläche **31** des Aufnahmeteils **30** und der Rolle **51** eingeschoben, bis der Kopf an der Anschlagfläche **33** des Aufnahmeteils **30** anstößt. Sodann wird bei Bedarf der Balg **60** auf das Abschlussteil **50** aufgesteckt. Nach dem Schweißvorgang wird durch Rückziehen der Schweißpistole der Schweißbithalter **12** von dem angeschweißten Schweißbit **13** abgezogen.

Bei einem linienförmigen Knickbereich **16,** wie er in Fig. 1 angenommen ist, können mehrere Schweißbits **13** nebeneinander derart angeschweißt werden, dass ihre Ringösen miteinander fluchten. Zum Ausbeulen des Knickbereichs kann dann durch sämtliche Ringösen eine Stange hindurchgeführt werden, an der die Ziehkraft angreift.

Die in der obigen Beschreibung angegebenen Materialien und Formen betreffen ein Ausführungsbeispiel. Das Schweißbit kann statt aus Aluminium auch aus Stahl oder einem anderen schweißbaren und elektrisch leitenden Werkstoff bestehen. Ähnlich kann das Aufnahmeteil aus beliebigem, elektrisch gut leitenden Material gefertigt sein. Auch die Ringösenform des Schweißbits ist nicht wesentlich.

### Bezugszeichenliste

- **10**: Pistolenkörper
- **11**: Kolbenstange
- **12**: Schweißbithalter
- **13**: Schweißbit
- **14**: Kopf von 13
- **15**: Spitze von 12
- **16**: Knickbereich
- **17**: Blech
- **20**: Stativ
- **21**: Spitze von 22
- **22**: Stativstab
- **23**: Rad
- **24**: Rastschieber
- **30**: Aufnahmeteil
- **31**: Kontaktfläche
- **32**: Führungsfächen
- **33**: Anschlagfläche
- **34**: Einlassbohrungen
- **35**: Auslassöffnungen
- **36**: Madenschraube
- **40**: Spanneinrichtung
- **41**: Rolle
- **42**: Aussparungen
- **43**: Ringnuten
- **44**: Schrauben
- **45**: Sprengringe
- **50**: Abschlussteil
- **51**: Vorsprung
- **52**: Vertiefung
- **53**: Schrauben
- **55**: Schlitz
- **56**: Bohrung
- **60**: Balg
- **61**: Wulstflansch
- **62**: Nut an 50
- **70**: Schutzgaszuführung

## Patentansprüche

1. Vorrichtung zur Halterung eines flächigen Schweißbits **(13)** an einer Schweißvorrichtung mit
einem elektrisch leitenden Aufnahmeteil **(30),** das eine Kontaktfläche **(31)** zur Anlage an einer Flachseite des Schweißbits **(13)** und eine Anschlagfläche **(33)** für das von der Schweißstelle abgewandte Ende des Schweißbits aufweist, und
einer Spanneinrichtung **(40)** zur Anpressen des Schweißbits **(13)** an die Kontaktfläche **(31),**
**dadurch gekennzeichnet, dass**
das Aufnahmeteil **(30)** zwei gegenüberliegende Führungsflächen **(32)** zur Anlage an Seitenkanten des Schweißbits aufweist und
die Spanneinrichtung **(40)** als federbelastete Rolle **(41)** ausgebildet ist, die um eine zu der Kontaktfläche **(31)** parallele und zu den Führungsflächen **(32)** quer verlaufende Achse drehbar ist.

2. Vorrichtung nach Anspruch 1, wobei die Kontaktfläche **(31)** zur Anlage am Randbereich des Schweißbits **(13)** hufeisenförmig gestaltet ist.

3. Vorrichtung nach Anspruch 1 oder 2, wobei die Rolle **(41)** einen mittleren Bereich mit gegenüber ihren Endbereichen verringertem Durchmesser aufweist.

4. Vorrichtung nach einem der vorhergehenden Ansprüche, wobei die Rolle **(41)** in an gegenüber liegenden Außenseiten des Aufnahmeteils **(30)** befestigten Sprengringen **(45)** gelagert ist.

5. Vorrichtung nach einem der vorhergehenden Ansprüche mit einem Abschlussteil **(50),** das mit dem von der Anschlagfläche **(33)** abgewandten Ende des Aufnahmeteils **(30)** verbunden ist und einen Schlitz **(55)** zum Durchführen des Schweißbits **(13)** aufweist.

6. Vorrichtung nach Anspruch 5, wobei das Aufnahmeteil **(30)** einen sich in eine Durchgangsbohrung **(56)** des Abschlussteils **(50)** öffnenden Schutzgaskanal **(34, 35)** aufweist.

7. Vorrichtung nach Anspruch 6, wobei der Schutzgaskanal **(34, 35)** mehrere Einlässe zum Anschluss einer Schutzgas-Zuführleitung **(70)** aufweist.

8. Vorrichtung nach einem der Ansprüche 5 bis 7 mit einem an dem Abschlussteil **(50)** montierbaren Balg **(60)** zum Abschirmen der Schweißstelle.

9. Vorrichtung nach Anspruch 8, wobei das Abschlussteil **(50)** eine Nut **(62)** zur Aufnahme eines elastischen Wulstflansches **(61)** des Balgs **(61)** aufweist.

## Claims

1. A device for holding a planar welding bit **(13)** in a welding apparatus, comprising
an electrically conductive receiving portion **(30)** having a contact surface **(31)** for contacting a flat side of the welding bit **(13)** and an abutment surface **(33)** for the end of the welding bit remote from the welding site, and
biasing means **(40)** for pressing the welding bit **(13)** against the contact surface **(31),**
**characterised in that**
the receiving portion **(30)** has two opposite guide surfaces **(32)** for abutting side edges of the welding bit, and
the biasing means **(40)** is formed as a spring loaded roller **(41)** which is rotatable about an axis extending parallel to the contact surface **(31)** and transverse to the guide surfaces **(32).**

2. The device of claim 1, wherein the contact surface **(31)** is horse shoe shaped for contacting a peripheral part of the welding bit **(13).**

3. The device of claim 1 or 2, wherein the roller **(41)** has a central portion of a reduced diameter with respect to its end portions.

4. The device of any preceding claim, wherein the roller **(41)** is mounted in circlips (45) fixed at opposite outer sides of the receiving portion **(30).**

5. The device of any preceding claim, having a terminal portion **(50)** which is connected to the end remote from the abutment surface **(33)** of the receiving portion **(30)** and has a slot **(55)** for passing the welding bit **(13).**

6. The device of claim 5, wherein the receiving portion **(30)** has a protective gas channel **(34, 35)** communicating with a through bore **(56)** of terminal portion **(50).**

7. The device of claim 6, wherein the protective gas channel **(34, 35)** has a plurality of inlets for connection of a protective gas feed line **(70).**

8. The device of any one of claims 5 to 7, comprising a bellows **(60)** adapted to be mounted on the terminal portion **(50)** for shielding the welding site.

9. The device of claim 8, wherein the terminal portion **(50)** has a groove **(62)** for receiving a resilient beaded flange **(61)** of the bellows **(61).**

## Revendications

1. Dispositif pour la fixation d'un bout de soudage plat (13) sur un dispositif de soudage, comportant :
une partie de réception électriquement conductrice (30), laquelle partie comporte une surface de contact (31) pour venir en appui sur un côté plat du bout de soudage (13) et une surface de butée (33) pour l'extrémité opposée à l'emplacement de soudage du bout de soudage, et
un dispositif de serrage (40) pour presser le bout de soudage (13) sur la surface de contact (31),
**caractérisé en ce que**
la partie de réception (30) comporte deux surfaces de guidage (32) situées l'une en face de l'autre pour venir en appui sur des bords latéraux du bout de soudage et
le dispositif de serrage (40) est conçu sous la forme d'un cylindre chargé par ressort (41) qui peut tourner autour d'un axe s'étendant parallèlement à la surface de contact (31) et transversalement aux surfaces de guidage (32).

2. Dispositif selon la revendication 1, dans lequel la surface de contact (31) est configurée en forme de fer à cheval pour venir en appui sur la zone de rebord du bout de soudage (13).

3. Dispositif selon la revendication 1 ou 2, dans lequel le cylindre (41) inclut une zone centrale ayant un diamètre réduit par rapport à ses zones d'extrémité.

4. Dispositif selon l'une quelconque des revendications précédentes, dans lequel le cylindre (41) est monté dans des circlips (45) fixés sur des côtés extérieurs de la partie de réception (30) situés l'un en face de l'autre.

5. Dispositif selon l'une quelconque des revendications précédentes muni d'une partie de fermeture (50), laquelle partie est reliée à l'extrémité de la partie de réception (30) opposée à la surface de butée (33), et comporte une fente (55) pour la traversée du bout de soudage (13).

6. Dispositif selon la revendication 5, dans lequel la partie de réception (30) comporte un canal de gaz protecteur (34, 35) débouchant dans un alésage de passage (56) de la partie de fermeture (50).

7. Dispositif selon la revendication 6, dans lequel le canal de gaz de protection (34, 35) comporte plusieurs entrées pour fermer une conduite d'alimentation en gaz protecteur (70).

8. Dispositif selon l'une quelconque des revendications 5 à 7 comportant un soufflet (60) pouvant être monté sur la partie de fermeture (50) pour protéger l'emplacement de soudage.

9. Dispositif selon la revendication 8, dans lequel la pièce de fermeture (50) comporte une rainure (62) destinée à recevoir une bride de talon élastique (61) du soufflet (60).
